## Europäisches Patentamt
## European Patent Office
## Office européen des brevets

(11) Veröffentlichungsnummer: **0 306 002 B1**

# EUROPÄISCHE PATENTSCHRIFT

(45) Veröffentlichungstag der Patentschrift: **15.04.92**

(21) Anmeldenummer: **88114209.5**

(22) Anmeldetag: **31.08.88**

(51) Int. Cl.⁵: **H04J 3/06**, H04L 7/02

(54) **Verfahren zur adaptiven Phasenanpassung in einer taktsynchron betriebenen Breitband-Digitalsignal-Koppelanordnung.**

(30) Priorität: **01.09.87 DE 3729171**

(43) Veröffentlichungstag der Anmeldung:
**08.03.89 Patentblatt 89/10**

(45) Bekanntmachung des Hinweises auf die Patenterteilung:
**15.04.92 Patentblatt 92/16**

(84) Benannte Vertragsstaaten:
**AT BE CH DE FR GB IT LI NL SE**

(56) Entgegenhaltungen:
**WO-A-82/04515**
**DE-A- 2 836 695**
**US-A- 3 823 269**

**PROCEEDINGS OF THE IEEE, Band 65, Nr. 9, September 1977, Seiten 1363-1374, New York, US; S.R. TREVES: "Maintenance strategies for PCM circuit switching"**

**PROCEEDINGS IEEE INTERNATIONAL SYMPOSIUM ON CIRCUITS AND SYSTEMS, San Jose, California, 5.-7. Mai 1986, Band 3, Seiten 1298-1301, IEEE, New York, US; J.P. HEIN: "LSI architectures for data/clock recovery"**

(73) Patentinhaber: **SIEMENS AKTIENGESELL-SCHAFT**
**Wittelsbacherplatz 2**
**W-8000 München 2(DE)**

(72) Erfinder: **Schaffer, Bernhard, Dipl.-Ing.**
**Planegger Strasse 15**
**W-8035 Gauting(DE)**

**Beschreibung**

Neuere Entwicklungen der Fernmeldetechnik führen zu diensteintegrierenden Nachrichtenübertragungs- u. -vermittlungssystemen für Schmalband- und Breitband-Kommunikationsdienste, die als Übertragungsmedium im Bereich der Teilnehmeranschlußleitungen Lichtwellenleiter vorsehen, über die sowohl die SchmalbandKommunikationsdienste, wie insbesondere 64-kbit/s-Digital-Telephonie, als auch Breitband-Kommunikationsdienste, wie insbesondere 140-Mbit/s-Bildtelephonie, geführt werden, wobei in den Vermittlungsstellen (vorzugsweise gemeinsame Steuereinrichtungen aufweisende) Schmalbandsignal-Koppelanordnungen und Breitbandsignal-Koppelanordnungen nebeneinander vorgesehen sein können (DE-PS 24 21 002).

Breitband-Digitalsignal-Koppelanordnungen für Bitraten um 100 Mbit und mehr bringen insbesondere dann, wenn mehrere Koppelstufen über Kabel miteinander zu verbinden sind, hinsichtlich der Signalqualität merkliche Probleme dadurch mit sich, daß sich Impulsverzerrungen und Nebensprechstörungen akkumulieren, so daß besondere Maßnahmen erforderlich werden können, um eine hinreichend kleine Bitfehlerrate zu gewährleisten.

Hierzu können in asynchronen, d.h. ohne Taktbindung transparent durchschaltenden Koppelanordnungen die Digitalsignale leitungscodiert durchgeschaltet werden, so daß am Ausgang der Koppelanordnung eine leitungsindividuelle Signalregenerierung möglich ist; bei großen Koppelanordnungen können auch zwischen deren Koppelstufen entsprechende Signalregeneratoren vorzusehen sein.

Synchrone Koppelanordnungen werden mit einem einheitlichen Systemtakt mit einer der Frequenz der durchzuschaltenden Digitalsignale entsprechenden Taktfrequenz betrieben, wobei zur Signalregenerierung in die zwischen den Koppelstufen verlaufenden Zwischenleitungen und/oder in die Koppelstufen selbst systemtaktgesteuerte bistabile Kippglieder eingefügt sind, denen der Systemtakt über entsprechende Verzögerungsglieder jeweils in einer Phasenlage zugeführt wird, die der in der Koppelanordnung bis zu der betreffenden Zwischenleitung gegebenen Laufzeit durchgeschalteter Digitalsignale entspricht (DE-C2-2 836 695 Fig.1 und 2; 1986 Intern. Zürich Seminar Conference Papers C.4.1 ...4); die Taktphase des Systemtakts soll dabei jeweils mit der zeitlichen Mitte eines gerade durchgeschalteten Digitalsignalelements zusammenfallen, so daß das betreffende Signalelement mit hoher Zuverlässigkeit regeneriert wird. Entsprechendes gilt auch, wenn man umgekehrt - wiederum im Zusammenhang mit einer Systemtaktverteilung - statt einer Phasenverschiebung der Taktsignale eine Phasenverschiebung der zu regenerierenden Digitalsignalelemente vorsieht (1986 Int. Zürich Seminar a.a.O.).

In der Praxis erhebt sich allerdings bei entsprechend hohen Taktfrequenzen das Problem, daß es nicht ohne weiteres möglich ist, ein Taktverteilsystem einzurichten, das den Systemtakt stets mit einer im Nanosekundenbereich liegenden Phasengenauigkeit verteilt; dazu kommt, daß die Laufzeitschwankungen in der Koppelanordnung von einem taktgesteuerten bistabilen Kippglied zum nächsten die Dauer eines Digitalsignalelements (Schrittdauer) übersteigen kann. Ein einfaches Einrasten in den Systemtakt ist dann nicht möglich.

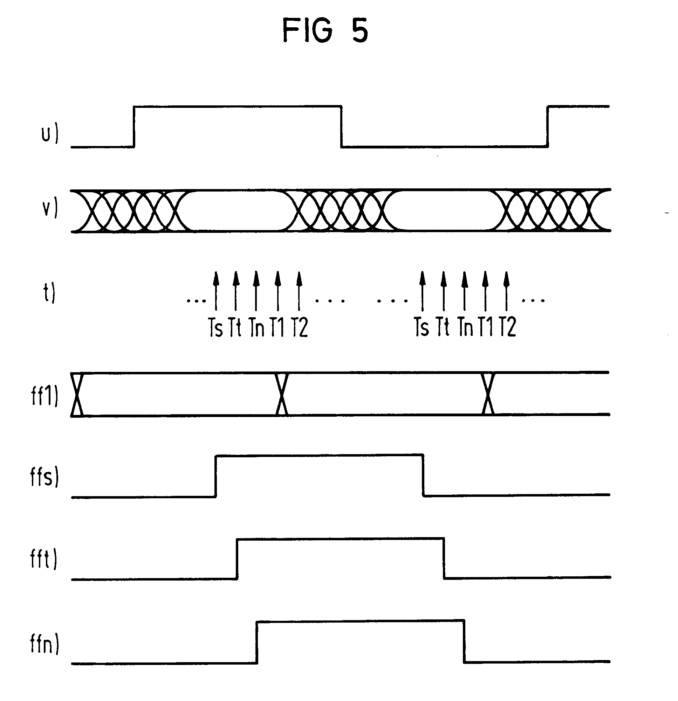

In diesem Zusammenhang ist es aber schon (aus 1986 Intern. Zürich Seminar a.a.O., Fig.5 und 6) bekannt, in jeder Digitalsignal- Eingangsleitung einer Breitband-Digitalsignal-Koppelanordnung einen automatischen Digitalsignal-Phasenschieber mit einer regelbaren Verzögerungsleitung vorzusehen, die von einem mit dem verzögerten Digitalsignal beaufschlagten, systemtaktgesteuerten Phasendetektor gesteuert wird; dies erfordert allerdings einen relativ hohen schaltungstechnischen Aufwand an leitungsindividuellen Phasendetektoren und Pasenschiebern. Die Erfindung zeigt demgegenüber einen Weg, ohne hohen leitungsindividuellen Aufwand eine gleichwohl adaptive gegenseitige Ausrichtung von Systemtaktphase und Digitalsignalelement-Mitte zu ermöglichen.

Die Erfindung betrifft ein Verfahren zur adaptiven Phasenanpassung von Systemtaktsignal und durchgeschalteten Digitalsignalelementen in einer taktsynchron betriebenen Breitband-Digitalsignal-Koppelanordnung. Dieses Verfahren ist erfindungsgemäß dadurch gekennzeichnet,
daß während eines Verbindungsaufbaus ein in den betreffenden Koppelanordnungseingang eingespeistes Prüfsignal von einem an den im Verlaufe des Verbindungsaufbaus jeweils gerade erreichten Ausgang einer Koppelstufe vorübergehend angeschalteten Prüfempfänger aufgenommen und zu unterschiedlichen Taktphasen regeneriert wird, daß die zu einer fehlerfreien Prüfsignalregenerierung führenden Taktphasen als akzeptable Taktphasen ermittelt werden,
daß aus diesen akzeptablen Taktphasen eine Taktphase als optimale Taktphase bestimmt und für die weitere Verbindungsdauer für die Digitalsignalregenerierung am Ausgang der betreffenden Koppelstufe wirksam gemacht wird,
und daß daraufhin der Prüfempfänger wieder abgeschaltet wird,
wonach diese Verfahrensschritte am Ausgang jeder folgenden Koppelstufe jeweils wiederholt werden;
zur Mitlaufüberwachung bereits bestehender (z.B. auch semipermanenter) Verbindungen kann erfindungsgemäß auch in der Weise verfahren werden, daß während einer Verbindung ein in den betreffenden Koppelanordnungseingang wiederholt - z.B. in einem Zeitmultiplexrahmen mit dem Nutzsignal zeitlich verschachtelt - eingespeistes Prüfsignal von einem an den im Zuge der Verbindung jeweils erreichten Ausgang einer Koppelstufe vorübergehend angeschalteten Prüfempfänger aufgenommen und zu unterschiedlichen Taktphasen regeneriert wird,

daß die zu einer fehlerfreien Prüfsignalregenerierung führenden Taktphasen als akzeptable Taktphasen ermittelt werden,

daß aus diesen akzeptablen Taktphasen erforderlichenfalls, nämlich bei fehlerhafter Prüfsignalregenerierung zu der bislang für die Digitalsignalregenerierung wirksamen Taktphase, eine neue Taktphase als optimale Taktphase bestimmt und für die weitere Verbindungsdauer für die Digitalsignalregenerierung am Ausgang der betreffenden Koppelstufe wirksam gemacht wird,

und daß daraufhin der Prüfempfänger wieder abgeschaltet wird, wonach diese Verfahrensschritte am Ausgang jeder folgenden Koppelstufe jeweils wiederholt werden.

Neben dem Vorteil, mit geringen Ansprüchen an die Phasengenauigkeit des Taktverteilsystems auskommen zu können, bringt die Erfindung eine Reihe weiterer Vorteile mit sich: Für die Aufnahme und Regenerierung des Prüfsignals zu unterschiedlichen Taktphasen genügt ein zentraler Prüfempfänger für eine Vielzahl von Ausgangsleitungen einer Koppelstufe; ein solcher zentraler Prüfempfänger kann daher auch relativ aufwendig sein, um einen optimalen Abtastzeitpunkt zu bestimmen. Ebenfalls jeweils zentral für eine Koppelstufe können auch die Systemtaktsignale unterschiedlicher Taktphasen gebildet werden; die zentral, jeweils für eine Vielzahl von Ausgangsleitungen einer Koppelstufe vorgesehenen Taktanpassungseinrichtungen können im Koppelstufen-Modul integriert sein. Mit der Taktanpassung ist zugleich auch eine Koppelfeldprüfung verbunden: Wird keine Taktphase gefunden, zu der das Prüfsignal richtig regeneriert wird, so erweist sich wegen der schrittweise von Koppelstufe zu Koppelstufe fortschreitenden Taktanpassung die gerade erreichte Koppelstufe als defekt.

Die Ermittlung der akzeptablen Taktphasen kann in weiterer Ausgestaltung der Erfindung in der Weise geschehen, daß die akzeptablen Taktphasen durch einen Vergleich der zu unterschiedlichen Taktphasen regenerierten Prüfsignale mit dem eingespeisten Prüfsignalmuster ermittelt werden. Der eigentliche Vergleich von ursprünglichem Prüfsignalmuster und zu unterschiedlichen Taktphasen regenerierten Prüfsignalen und die Auswahl der optimalen Taktphase können dabei auch mittels eines Mikroprozessors durchgeführt werden, was es ermöglicht, auch komplexere Auswahlkriterien einzuführen. Dabei kann auch eine genauere Fehlerdiagnose, z.B. im Hinblick auf Doppelverbindungen, dadurch ermöglicht werden, daß man in weiterer Ausgestaltung der Erfindung verbindungsindividuell unterschiedliche Prüfmuster einspeist. Man kann aber auch beliebige Digitalsignalelemente als - dann prüfempfängerseitig nicht bekanntes - Prüfmuster benutzen, wobei prüfempfängerseitig von mehreren benachbarten Taktphasen, zu denen jeweils miteinander übereinstimmende regenierte Digitalsignalelemente auftreten, eine mittlere Taktphase als optimale Taktphase bestimmt werden kann. In diesem Fall ist die Einspeisung eines eigenen Prüfbitmusters nicht erforderlich, und das Nutzsignal selbst kann zur Taktanpassung verwendet werden.

Weitere Besonderheiten der Erfindung werden aus der nachfolgenden näheren Erläuterung eines Ausführungsbeispiels anhand der Zeichnungen ersichtlich.

Dabei zeigt

FIG 1 schematisch ein Ausführungsbeispiel einer gemäß der Erfindung taktsynchron betriebenen Breitband-Digitalsignal-Koppelanordnung;

FIG 2 zeigt einen darin vorgesehenen Digitalsignalregenerator in schaltungstechnischen Einzelheiten, und

FIG 3 verdeutlicht die Phasenbeziehung zwischen Systemtakt und Digitalsignal.

FIG 4 zeigt ein Ausführungsbeispiel eines Prüfempfängers, und

FIG 5 verdeutlicht Signalverläufe darin.

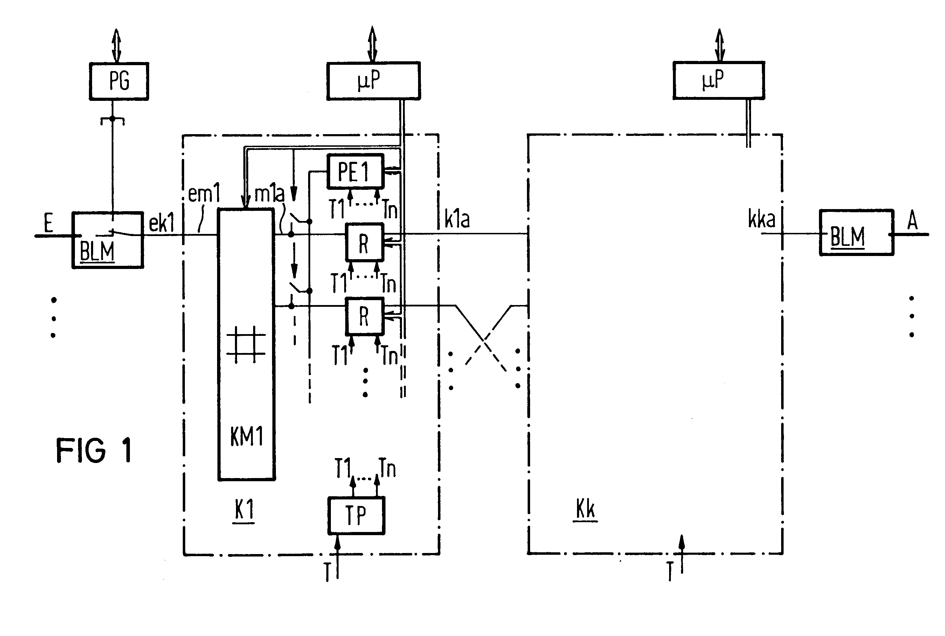

In der Zeichnung FIG 1 ist schematisch in einem zum Verständnis der Erfindung erforderlichen Umfange ein Ausführungsbeispiel einer gemäß der Erfindung synchron betriebenen Breitband-Digitalsignal- Koppelanordnung dargestellt. Die Koppelanordnung weist im Beispiel zwei Koppelstufen K1, Kk auf, über die Eingangsleitungen E,... zu Ausgangsleitungen A,... durchgeschaltet werden können. Bei den Eingangsleitungen E,... und Ausgangsleitungen A,... kann es sich beispielsweise um Lichtwellenleiter handeln, die jeweils über ein einen optoelektrischen bzw. elektrooptischen Wandler enthaltendes Breitband-Leitungsabschluß-Modul BLM an einen zugehörigen Eingang ek1,... der ersten Koppelstufe (K1) bzw. Ausgang kka,... der letzten Koppelstufe (Kk) angeschlosssen sein mögen. Wie dies in FIG 1 für die Koppelstufe K1 angedeutet ist, führen die Koppelstufeneingänge ek1,... zu entsprechenden Eingängen em1,... einer Koppelmatrix KM1, deren Ausgänge m1a,... ihrerseits zu den Ausgängen k1a,... der Koppelstufe K1 führen.

Ohne daß dies in FIG 1 im einzelnen dargestellt ist, möge in entsprechender Weise auch die nachfolgende Koppelstufe Kk ausgebildet sein. Jede Koppelstufe werde an einem zentralen Takteingang T mit dem Systemtakt beaufschlagt, aus dem in der Koppelstufe in einem (beispielsweise mit einer mit Abgriffen versehenen Laufzeitleitung (Laufzeitkette) zu realisierenden) Taktphasengenerator TP auf gesonderten Taktsignalleitungen T1,...,Tn auftretende Taktsignale gleicher Frequenz, aber unterschiedlicher Phasenlage, abgeleitet werden.

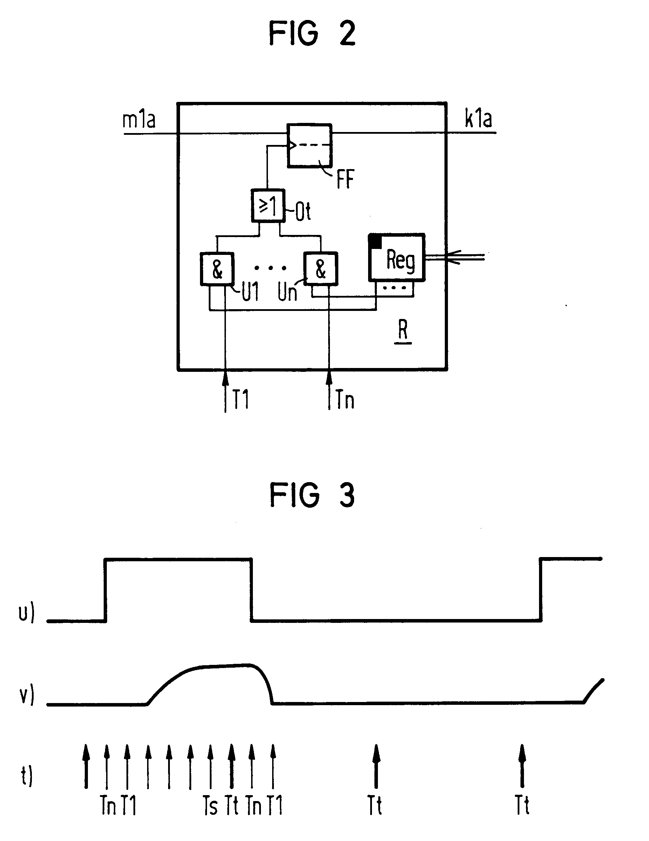

Zwischen die Koppelmatrixausgänge m1a,... und die nachfolgenden Koppelstufenausgänge k1a,... ist jeweils ein Digitalsignalregenerator R eingefügt, in welchem die jeweils durchgeschalteten Digitalsignalelemente (zeit- und amplituden-)regeneriert werden; dies geschieht zweckmäßigerweise durch Abtastung jedes durchgeschalteten Digitalsignalelements mit Hilfe eines in einer bestimmten Phasenlage systemtaktgesteuerten bistabilen Kippgliedes, wie dies zu Beispiel aus FIG 2 näher ersichtlich wird.

In FIG 2 ist ein solcher Digitalsignalregenerator in weiteren schaltungstechnischen Einzelheiten dargestellt. Das zwischen Koppelmatrixausgang (m1a) und Koppelstufenausgang (k1a) eingefügte bistabile Kippglied (D-Flip-Flop) ist hier mit FF bezeichnet; zum Takteingang des bistabilen Kippgliedes FF führt ein ODER-Glied Ot, das eine Reihe UND-Gliedern U1,...,Un zusammenfaßt, die ihrerseits von den Taktsignalleitungen T1,...,Tn (siehe auch in FIG 1) her zu jeweils unterschiedlichen Phasenlagen mit dem Systemtakt beaufschlagt werden.

An dieser Stelle sei ein Blick auf FIG 3 geworfen, in der in Zeile t) solche unterschiedlichen Systemtakt-Phasenlagen T1,..., Ts, Tt, Tn angedeutet sind. Darüber ist in Zeile v) ein durchgeschaltetes und dabei verzerrtes Digitalsignal dargestellt; in Zeile u) ist das noch unverzerrte Digitalsignal vor der Durchschaltung dargestellt. Um das verzerrte Signal zu regenerieren, wird es zu einer bestimmten Taktphase im Systemtakt abgetastet. Hierfür akzeptable Taktphasen sind unter den in FIG 3 skizzierten Verhältnissen die Taktphasen Ts, Tt, Tn, wobei die mittlere Taktphase Tt optimal ist.

Im Digitalsignalregenerator R gemäß FIG 2 wird von einem Register Reg her dasjenige der UND-Glieder U1,...,Un entriegelt, das von der zugehörigen Taktsignalleitung (T1,...,Tn) mit dem Taktsignal optimaler Taktphase beaufschlagt wird; mit dieser Taktphase wird damit dann das bistabile Kippglied FF vom Systemtakt gesteuert.

Um dabei für jede Koppelstufe (K1, Kk in FIG 1) die jeweils optimale Taktphase zu bestimmen, wird nun während eines Verbindungsaufbaus in den von dieser Verbindung belegten Koppelanordnungseingang, z.B. in den Eingang ek1 der in FIG 1 skizzierten Breitband-Digitalsignal-Koppelanordnung, ein Prüfsignal eingespeist. In FIG 1 ist dazu angedeutet, daß ein Prüfsignalgenerator PG vorgesehen ist, der über das jeweilige Breitband-Leitungsabschluß- Modul BLM an den zugehörigen Koppelanordnungseingang, im Beispiel an den Eingang ek1, anschaltbar ist. Gleichzeitig ist, wie dies ebenfalls in FIG 1 angedeutet ist, ein Prüfempfänger PE1 an den von der betreffenden Verbindung erreichten Ausgang der Koppelmatrix KM1, beispielsweise an deren Ausgang m1a, kurzzeitig anschaltbar, so daß das über die Koppelmatrix KM1 im Zuge der gerade aufzubauenden Verbindung durchgeschaltete Prüfsignal zum Prüfempfänger PE1 gelangt. Ein Mikroprozessor μP möge die vom Prüfempfänger PE1 angezeigte Übereinstimmung des im Prüfempfänger empfangenen und regenerierten Prüfsignals mit dem am Koppelstufeneingang eingespeisten Prüfsignalmusterbewerten, wobei der Mikroprozessor μP nacheinander unterschiedliche Taktphasen T1,...,Tn im insoweit wie ein Taktregenerator ausgebildeten Prüfempfänger PE1 wirksam macht.

Die Taktphasen, zu denen das Prüfsignal unverfälscht regeneriert wird, werden im Mikroprozessor als akzeptable Taktphasen (Ts, Tt, Tn in FIG 3) gespeichert; aus diesen akzeptablen Taktphasen wählt der Mikroprozessor dann eine, z.B. die in der Mitte der akzeptablen Taktphase liegende Taktphase, als optimale Taktphase aus und speichert sie im Register Reg (in FIG 2) des zugehörigen Digitalsignalregenerators R ab, so daß während der nachfolgenden Verbindung das der optimalen Taktphase entsprechende UND-Glied (U1,...,Un in FIG 2) entriegelt ist. Diese optimale Taktphase ist damit für die weitere Verbindungsdauer für die Digitalsignalregenerierung am Ausgang k1a der Koppelstufe K1 wirksam.

Der Prüfempfänger PE wird daraufhin wieder abgeschaltet. Wie dies auch aus FIG 1 ersichtlich wird, kann die An- und Abschaltung des Prüfempfängers PE 1 vom Mikroprozessor μP her gesteuert werden, der auch die Koppelmatrix KM1 der Koppelstufe K1 steuert; wie in FIG 1 weiter angedeutet ist, kann der Mikroprozessor μP seinerseits von einer in FIG 1 nicht weiter dargestellten übergeordneten Vermittlungssteuerung her gesteuert werden. In entsprechender Weise können auch der Mikroprozessor der Koppelstufe Kk und ggf. auch der Prüfsignalgenerator PG von der übergeordneten Vermittlungssteuerung her steuerbar sein.

Im Zuge des weiteren Verbindungsaufbaus werden die vorstehend erläuterten Verfahrensschritte in der nächsten Koppelstufe Kk - und in entsprechender Weise auch in jeder etwaigen weiteren Koppelstufe - durchgeführt, bis dabei schließlich das Leitungsabschlußmodul derjenigen von der Koppelanordnung abgehenden Leitung A,... erreicht ist, zu der hin die Verbindung in der Koppelanordnung durchzuschalten ist. Damit ist dann für jede Koppelstufe der Breitband-Digitalsignal-Koppelanordnung die für diese Verbindung optimale Taktregenerierungsphase bestimmt worden.

Zugleich ist mit einer solchen Taktanpassung auch eine Koppelfeldprüfung verbunden: Wurde in einer Koppelstufe keine Taktphase gefunden, zu der das Prüfsignal richtig regeneriert wird, so erweist sich wegen der schrittweise von Koppelstufe zu Koppelstufe fortschreitenden Taktanpassung die betreffende Koppelstufe als defekt. Eine genauere Fehlerdiagnose kann dabei dadurch ermöglicht werden, daß vom Prüfsignalgenerator PG (in FIG 1) verbindungsindividuell unterschiedliche Prüfsignalmuster eingespeist werden, die zugleich gesondert dem jeweiligen Prüfempfänger mitgeteilt werden; prüfempfängerseitig kann dann jeweils festgestellt werden, ob der betreffende Koppelstufenausgang (nur) von dem der zu dem betreffenden Koppelstufenausgang aufzubauenden Verbindung zugehörigen Koppelanordnungseingang erreicht wurde oder etwa in einer fehlerhafterweise zustandegekommenen Doppelverbindung (auch) von einem ganz anderen Koppelstufeneingang.

Der im vorstehenden anhand der FIG 1 bis 3 erläuterte Verfahrensablauf kann auch zur Mitlaufüberwachung bestehender, z.B. semipermanenter Verbindungen dahingehend modifiziert werden, daß, von der übergeordneten Vermittlungssteuerung ausgelöst, der Prüfgenerator PG in den Koppelanordnungseingang einer z.B. semipermanent bestehenden Verbindung wiederholt ein Prüfsignal (z.B. statt eines Rahmensynchronwortes) einspeist, das daraufhin in den oben erläuterten Vorgängen entsprechender Weise wiederum von Koppelstufe (K1) zu Koppelstufe (Kk) fortschreitend vom koppelstufenindividuellen Prüfempfänger (PE1) aufgenommen und, vom zugehörigen Mikroprozessor (μP) gesteuert, zu unterschiedlichen Taktphasen regeneriert wird; nach der Ermittlung akzeptabler Taktphasen braucht dann aus diesen akzeptablen Taktphasen nur bei fehlerhafter Prüfsignalregenerierung zu der bislang für die Digitalsignalregenerierung wirksamen Taktphase eine neue Taktphase als optimale Taktphase bestimmt und für die weitere Verbindungsdauer für die Digitalsignalregenerierung am Ausgang der betreffenden Koppelstufe wirksam gemacht zu werden. Danach kann dann der Prüfempfänger (PE1) der betreffenden Koppelstufe (K1) wieder abgeschaltet werden, und es können diese Verfahrensschritte am Ausgang der jeweils folgenden Koppelstufe wiederholt werden.

Die vorstehende Erläuterung eines Ausführungsbeispiels der Erfindung geht mit der Ermittlung akzeptabler Taktphasen durch einen Vergleich der zu unterschiedlichen Taktphasen (T1,...,Tn in FIG 3) regenerierten Prüfsignale mit dem eingespeisten Prüfsignalmuster davon aus, daß das Prüfsignalmuster als solches prüfempfängerseitig verfügbar ist; das kann z.B. dadurch erreicht werden, daß ein solches (insbesondere einheitliches) Prüfsignalmuster auf der Prüfempfängerseite fest gespeichert ist oder daß das jeweilige (insbesondere verbindungsindividuelle) Prüfsignalmuster mit Hilfe des zugehörigen Mikroprozessors (μP in FIG 1) bzw. der übergeordneten Vermittlungssteuerung von Fall zu Fall dem Prüfempfänger (PE1 in FIG 1) zugeführt wird.

Bei entsprechender Ausbildung des Prüfempfängers ist es aber auch möglich, auf einen Vergleich des regenerierten Prüfsignals mit dem bekannten Prüfsignalmuster zu verzichten und die akzeptablen Taktphasen unmittelbar aus einem zu unterschiedlichen Taktphasen regenerierten Prüfsignal zu ermitteln, das dann auch durch eine ohnehin auftretende (von Dauer-"0" oder Dauer-"1" abweichende) Bitfolge, z.B. auch durch ein beliebiges Rahmensynchron- oder Nutzsignalwort, gebildet sein kann.

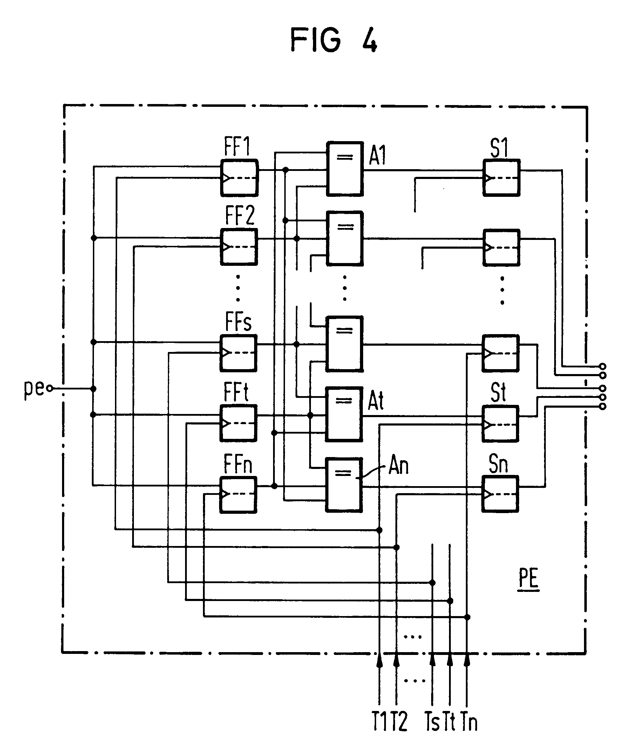

Ein Ausführungsbeispiel eines hierfür geeigneten Prüfempfängers ist in FIG 4 dargestellt. Gemäß FIG 4 weist der Prüfempfänger PE n zu den unterschiedlichen Taktphasen T1,...,Tn (in FIG 3 und in FIG 5) taktgesteuerte bistabile Kippglieder FF1,...,FFn auf, die eingangsseitig vom Prüfempfängereingang pe her mit dem zu regenerierenden Digitalsignal beaufschlagt werden. Ausgangsseitig sind Gruppen von (beispielsweise 3) jeweils zu unmittelbar aufeinanderfolgenden Taktphasen taktgesteuerten bistabilen Kippgliedern jeweils durch ein Äquivalenz-Glied zusammengefaßt, so die bistabilen Kippglieder FFn, FF1 und FF2 durch ein Äquivalenz-Glied A1, die bistabilen Kippglieder FFs, FFt, FFn durch ein Äquivalenz-Glied At und die bistabilen Kippglieder FFt, FFn und FF1 durch ein Äquivalenz-Glied An.

Dabei ist für ein solches Äquivalenzglied die Koenzidenzbedingung jeweils dann erfüllt, wenn zu den jeweiligen aufeinanderfolgenden Taktphasen ein und dasselbe Digitalsignalelement (re-)generiert wird; die mittlere Taktphase ist dann insoweit die optimale Taktphase und kann als solche von einem dem betreffenden Äquivalenz-Glied A1,..., At, An nachgeschalteten bistabilen Kippglied S1,... St, Sn gespeichert und angezeigt werden. Dabei können bei Zusammenfassung von jeweils nur drei bistabilen Kippgliedern ... FFn, FF1, FF2, ... und großer Augenöffnung des zu regenerierenden Digitalsignals ggf. auch mehrere Taktphasen gleichzeitig als optimal gewertet und angezeigt werden, aus denen dann noch eine optimale Taktphase bestimmt werden kann, zu der das zu regenerierende Digitalsignal schließlich zu regenerieren ist. Diese Taktphase kann dann im Register Reg (in FIG 2) des Digitalsignalregenerators R (in FIG 2) abgespeichert werden, so daß in der oben zu FIG 2 erläuterten Weise das Digitalsignal gerade zu dieser Taktphase regeneriert wird.

Es sei nun noch ein Blick auf die Zeichnung FIG 5 geworfen, in der in dem in FIG 4 skizzierten Prüfempfänger sich ergebende Signalverläufe skizziert sind. Dabei ist in FIG 5 in Zeile v) ein Digitalsignal-Augendiagramm dargestellt, das zu den in Zeile t) dargestellte Taktphasen abgetastet werde. Der Abtastung möge ein (unverzerrtes) Digitalsignal zugrunde liegen, wie es in Zeile u) dargestellt ist.

In den Zeilen ff1), ffs), fft) und ffn) sind dann die sich bei dieser Abtastung ergebenden Signalzustände der bistabilen Kippglieder FF1, FFs, FFt und FFn (in FIG 4) dargestellt; aus dieser Darstellung wird auch ersichtlich, daß unter den skizzierten Verhältnissen die Taktphase Tt sich als optimale Taktphase erweist.

Abschliessend sei noch bemerkt, daß die zwischen verschiedenen IC-Bausteinen einer Breitband-Digitalsignal-Koppelanordnung auftretenden Signallaufzeiten eine große Rolle spielen, weshalb zweckmäßigerweise möglichst viel Logikkomplexe, zwischen denen enge Laufzeitbeziehungen bestehen, auf ein und demselben IC-Baustein integriert sein sollten. Insbesondere sollten in einer gemäß der Erfindung taktsynchron betriebenen Breitband-Digitalsignal-Koppelanordnung die jeweils einer Koppelstufe zugehörigen Digitalsignalregeneratoren (R in FIG 1), ein zugehöriger Taktphasenregenerator (TP in FIG 1) und der Prüfempfänger (PE1 in FIG 1) auf einem IC-Baustein integriert sein, vorzugsweise zusammen mit der zugehörigen Koppelmatrix (KM1 in FIG 1) auf ein und demselben IC-Baustein, wie dies auch in FIG 1 mit einer strichpunktierten Linie angedeutet ist.

**Patentansprüche**

1. Verfahren zur adaptiven Phasenanpassung von Systemtaktsignal und durchgeschalteten Digitalsignalelementen in einer taktsynchron betriebenen Breitband-Digitalsignal-Koppelanordnung, **dadurch gekennzeichnet,** daß während eines Verbindungsaufbaus ein in den betreffenden Koppelanordnungseingang (ek1) eingespeistes Prüfsignal von einem an den im Verlaufe des Verbindungsaufbaus jeweils gerade erreichten Ausgang (k1a) einer Koppelstufe (K1) vorübergehend angeschalteten Prüfempfänger (PE1) aufgenommen und zu unterschiedlichen Taktphasen (T1,...,Tn) regeneriert wird, daß die zu einer fehlerfreien Prüfsignalregenerierung führenden Taktphasen als akzeptable Taktphasen (Ts,Tt,Tn) ermittelt werden, daß aus diesen akzeptablen Taktphasen (Ts,Tt,Tn) eine Taktphase als optimale Taktphase (Tt) bestimmt und für die weitere Verbindungsdauer für die Digitalsignalregenerierung am Ausgang (k1a) der betreffenden Koppelstufe (K1) wirksam gemacht wird, und daß daraufhin der Prüfempfänger (PE1) wieder abgeschaltet wird, wonach diese Verfahrensschritte am Ausgang jeder folgenden Koppelstufe (Kk) jeweils wiederholt werden.

2. Verfahren zur adaptiven Phasenanpassung von Systemtaktsignal und durchgeschalteten Digitalsignalelementen in einer taktsynchron betriebenen Breitband-Digitalsignal-Koppelanordnung, **dadurch gekennzeichnet,** daß während einer Verbindung ein in den betreffenden Koppelanordnungseingang (ek1) wiederholt eingespeistes Prüfsignal von einem an den im Zuge der Verbindung jeweils erreichten Ausgang (k1a) einer Koppelstufe (K1) vorübergehend angeschalteten Prüfempfänger (PE1) aufgenommen und zu unterschiedlichen Taktphasen (T1,...,Tn) regeneriert wird, daß die zu einer fehlerfreien Prüfsignalregenerierung führenden Taktphasen als akzeptable Taktphasen (Ts,Tt,Tn) ermittelt werden, daß aus diesen akzeptablen Taktphasen (Ts,Tt,Tn) erforderlichenfalls eine neue Taktphase als optimale Taktphase (Tt) bestimmt und für die weitere Verbindungsdauer für die Digitalsignalregenerierung am Ausgang (k1a) der betreffenden Koppelstufe (K1) wirksam gemacht wird, und daß daraufhin der Prüfempfänger (PE1) wieder abgeschaltet wird, wonach diese Verfahrensschritte am Ausgang jeder folgenden Koppelstufe (Kk) jeweils wiederholt werden.

3. Verfahren nach Anspruch 1 oder 2, **dadurch gekennzeichnet,** daß als Prüfsignal ein ohnehin durchgeschaltetes Synchron- oder Nutzsignal mitausgenutzt wird.

4. Verfahren nach Anspruch 1 oder 2, **dadurch gekennzeichnet,** daß die akzeptablen Taktphasen durch einen Vergleich der zu unterschiedlichen Taktphasen (T1,...Tn) regenerierten Prüfsignale mit dem eingespeisten Prüfsignalmuster ermittelt werden.

5. Verfahren nach Anspruch 4, **dadurch gekennzeichnet,** daß jeweils verbindungsindividuelle Prüfsignalmuster eingespeist werden.

6. Verfahren nach einem der Ansprüche 1 bis 5,

**dadurch gekennzeichnet,**
daß mit der Taktphasenanpassung eine Koppelfeldprüfung verbunden wird.

7. Schaltungsanordnung zur adaptiven Phasenanpassung von Systemtaktsignal und durchgeschalteten Digitalsignalelementen in einer taktsynchronbetriebenen Breitband-Digitalsignal-Koppelanordnung gemäß einem der Ansprüche 1 bis 6,
**dadurch gekennzeichnet,**
daß ein mit einem zentralen Systemtakt (T) beaufschlagter, Taktsignale (T1,...,Tn) gleicher Frequenz und unterschiedlicher Phasenlage auf gesonderten Taktsignalleitungen erzeugender Taktphasen generator (TP) koppelstufenindividuell vorgesehen ist,
daß ein jeweils vorübergehend an einen von einer Verbindung belegten Koppelstufenausgang (m1a) angeschalteter und ein dorthin durchgeschaltetes Prüfsignal aufnehmender und zu unterschiedlichen Taktphasen (T1,...,Tn) regenerierender Prüfempfänger (PE1) ebenfalls koppelstufenindividuell vorgesehen ist
und daß jeder Koppelstufenausgang (k1a,...) mit einem jeweils mit dem Taktsignal in einer zu einer fehlerfreien Prüfsignalregenerierung führenden Taktphase (Tt) synchronisierten Digitalsignalregenerator (R) versehen ist.

8. Schaltungsanordnung nach Anspruch 7,
**dadurch gekennzeichnet,**
daß die einer Koppelstufe (K1) zugehörigen Digitalsignalregeneratoren (R), der Taktphasengenerator (TP) und der Prüfempfänger (PE1) auf einem IC-Baustein integriert sind.

9. Schaltungsanordnung nach Anspruch 8,
**dadurch gekennzeichnet,**
daß die einer Koppelstufe (K1) zugehörigen Digitalsignalregeneratoren (R), der Taktphasengenerator (TP) und der Prüfempfänger (PE1) zusammen mit der zugehörigen Koppelmatrix (KM1) auf einem IC-Baustein integriert sind.

**Claims**

1. Process for the adaptive phase adjustment of the system clock signal and through-connected digital signal elements in a clock-synchronous broadband digital signal switching arrangement, characterised in that during the setting up of a connection, a test signal fed into the relevant switching arrangement input (ekl) is picked up by a test receiver (PE1) temporarily connected to the output (kla) of a switching stage (k1) in each case just reached in the course of the setting up of the connection and is regenerated at different clock phases (T1,...,Tn), in that the clock phases leading to an error-free test signal regeneration are determined as acceptable clock phases (Ts, Tt, Tn), in that from these acceptable clock phases (Ts, Tt, Tn) one clock phase is determined as the optimum clock phase (Tt) and is made effective at the output (kla) of the relevant switching stage (K1) for the digital signal regeneration for the further duration of the connection, and in that the test receiver (PE1) is thereupon disconnected again, whereafter these steps of the process are in each case repeated at the output of each following switching stage (Kk).

2. Process for the adaptive phase adjustment of the system clock signal and through-connected digital signal elements in a clock-synchronous broadband digital signal switching arrangement, characterised in that during a connection, a test signal repeatedly fed into the relevant switching arrangement input (ek1) is picked up by a test receiver (PE1) temporarily connected to the output (kla) of a switching stage (K1) in each case reached in the course of the connection and is regenerated at different clock phases (T1,...,Tn), in that the clock phases leading to an error-free test signal regeneration are determined as the acceptable clock phases (Ts, Tt, Tn), in that, if necessary, a new clock phase is determined as the optimum clock phase (Tt) from these acceptable clock phases (Ts, Tt, Tn) and is made effective at the output (kla) of the relevant switching stage (K1) for the digital signal regeneration for the further duration of the connection, and in that the test receiver (PE1) is thereupon disconnected again, whereafter these steps of the process are in each case repeated at the output of each following switching stage (Kk).

3. Process according to Claim 1 or 2, characterised in that a synchronous or useful signal connected through in any case is also utilized as test signal.

4. Process according to Claim 1 or 2, characterised in that the acceptable clock phases are determined by comparing the test signals regenerated to form different clock phases (T1,...,Tn) with the test signal pattern fed in.

5. Process according to Claim 4, characterized in that in each case connection-individual test signal patterns are fed in.

6. Process according to one of Claims 1 to 5, characterised in that the clock phase adjustment is connected with a switching matrix test.

7. Circuit arrangement for the adaptive phase adjustment of system clock signal and through-connected digital signal elements in a clock-synchronous broadband digital signal switching arrangement according to one of Claims 1 to 6, characterised in that switching-stage-individually a clock phase generator (TP) is provided to which a central system clock (T) is applied and which generates clock signals (T1,...,Tn) of the same frequency and different phase angle on separate clock signal lines, in that a test receiver (PE1), which is in each case temporarily connected to a switching stage output (mla), to which a connection is connected, and which receiver picks up a test signal connected through to the output and regenerates it at different clock phases (T1,...,Tn), is also switching-stage-individually provided, and in that each switching stage output (Kla,...) is provided with a digital signal regenerator (R) which is in each case synchronized with the clock signal in a clock phase (Tt) leading to an error-free test signal regeneration.

8. Circuit arrangement according to Claim 7, characterised in that the digital signal regenerators (R) belonging to a switching stage (K1), the clock phase generator (TP) and the test receiver (PE1) are integrated on one IC chip.

9. Circuit arrangement according to Claim 8, characterised in that the digital signal regenerators (R) belonging to a switching stage (K1), the clock phase generator (TP) and the test receiver (PE1), together with the associated switching matrix (KM1), are integrated on one IC chip.

**Revendications**

1. Procédé pour réaliser l'ajustement adaptatif de phase d'un signal de cadence d'un système et d'éléments de signaux numériques transmis directement dans un dispositif de couplage de signaux numériques à large bande fonctionnant d'une manière synchronisée sur une cadence, caractérisé par le fait que pendant l'établissement d'une liaison, un signal de contrôle introduit à l'entrée considérée (ek1) du dispositif de couplage est reçu par un récepteur de contrôle (PE1) raccordé transitoirement à la sortie (k1a) d'un étage de couplage (K1), respectivement atteinte précisément au cours de l'établissement de la liaison, et est régénéré à différentes phases de cadence (T1,...,Tn), que les phases de cadence, qui aboutissent à une régénération sans erreur du signal de contrôle, sont déterminées comme étant des phases de cadence admissibles (Ts,Tt,Tn), qu une phase de cadence est déterminée comme étant une phase optimale de cadence (Tt) à partir de ces phases de cadence admissibles (Ts,Tt,Tn) et que l'étage de couplage considéré (K1) est rendu actif pendant la suite de la durée de la liaison pour la régénération du signal numérique à la sortie (k1a), et qu'ensuite, le récepteur de contrôle (PE1) est à nouveau débranché, à la suite de quoi ces étapes opératoires sont respectivement répétées à la sortie de chaque étage de couplage suivant (Kk).

2. Procédé pour réaliser l'ajustement adaptatif de phase d'un signal de cadence d'un système et d'éléments de signaux numériques transmis directement dans un dispositif de couplage de signaux numériques à large bande fonctionnant d'une manière synchronisée sur une cadence, caractérisé par le fait que pendant une liaison, un signal de contrôle introduit de façon répétée à l'entrée considérée (ek1) du dispositif de couplage est reçu par un récepteur de contrôle (PE1) raccordé de façon transitoire au cours de la liaison d'une sortie respectivement atteinte (k1a) d'un étage de couplage (K1) et est régénéré à des phases différentes de cadence (T1, ..., Tn), que les phases de cadence, qui aboutissent à une régénération sans erreur du signal de contrôle, sont déterminées comme étant des phases de cadence admissibles (Ts,Tt,Tn), que, dans le cas où cela est nécessaire, une nouvelle phase de cadence est déterminée comme étant une phase optimale de cadence (Tt) à partir de ces phases de cadence admissibles (Ts,Tt,Tn) et est rendue active pour la poursuite de la durée de la liaison pour la régénération du signal numérique à la sortie (k1a) de l'étage de couplage considéré (K1), et qu'ensuite le récepteur de contrôle (PE1) est à nouveau débranché, à la suite de quoi ces étapes opératoires sont répétées respectivement à la sortie de chaque étage de couplage suivant (Kk).

3. Procédé suivant la revendication 1 ou 2, caractérisé par le fait qu'on utilise simultanément, comme signal de contrôle, un signal synchrone ou un signal utile transmis directement.

4. Procédé suivant la revendication 1 ou 2, caractérisé par le fait que les phases admissibles de cadence sont déterminées par une comparaison des signaux de contrôle régénérés à des phases de cadence différentes (T1,...Tn), avec le modèle de signal de contrôle introduit.

5. Procédé suivant la revendication 4, caractérisé par le fait qu'on introduit respectivement des modèles de signaux de contrôle prévus individuellement pour chaque liaison.

6. Procédé suivant l'une des revendications 1 à 5, caractérisé par le fait qu'un contrôle du champ de couplage est associé à l'ajustement de la phase de cadence.

7. Montage pour réaliser l'ajustement adaptatif de phase d'un signal de cadence d'un système et d'élements de signaux numériques transmis directement dans un dispositif de couplage de signaux numériques à large bande fonctionnant d'une manière synchronisée sur une cadence suivant les revendications 1 à 6, caractérisé par le fait
qu'il est prévu, individuellement pour chaque étage de couplage, un générateur de phase de cadence (TP), qui est chargé par une cadence centrale (T) du système et produit des signaux de cadence (T1,...,Tn) de même fréquence et ayant des positions de phase différentes, dans des lignes séparées de transmission de signaux,
qu il est prévu également individuellement pour chaque étage de couplage, un récepteur de contrôle (PE1) qui est raccordé respectivement transitoirement à une sortie (m1a) de l'étage de couplage, qui est occupée par une liaison, et reçoit un signal de contrôle transmis directement à cette sortie et régénère ce signal à des phases de cadence différentes (T1,...,Tn),
et que chaque sortie (k1a,...) de l'étage de couplage est équipée d'un régénérateur de signaux numériques (R) synchronisé respectivement avec le signal de cadence dans une phase de cadence (Tt) conduisant à une régénération sans erreur du signal de contrôle.

8. Montage suivant la revendication 7, caractérisé par le fait que les régénérateurs (R) du signal numérique, qui sont associés à l'étage de couplage (K1), le régénérateur de phase de cadence (TP) et le récepteur de contrôle (PE1) sont intégrés sur un module à circuits intégrés.

9. Montage suivant la revendication 8, caractérisé par le fait que les régénérateurs de signaux numériques (R), qui sont associés à un étage de couplage (K1), le générateur de phase de cadence (TP) et le récepteur de contrôle (PE1) sont intégrés, conjointement avec la matrice de couplage associée (KM1), sur un module à circuits intégrés.

FIG 1

# FIG 2

# FIG 3

# FIG 4

# FIG 5